# EUROPEAN PATENT APPLICATION

(11) **EP 4 660 453 A1**
(43) Date of publication of application: **10.12.2025**
(21) Application number: 24179634.1
(22) Date of filing: 03.06.2024
(51) Int. Cl.: F03D 17/00, G05B 23/02, G06N 20/00, G06Q 50/06

(54) **ARTIFICIAL INTELLIGENCE IN CONTRACTUAL REPORTING FOR HYBRID POWER PLANTS**

(71) Applicant: VESTAS WIND SYSTEMS A/S, 8200 Aarhus N (DK)
(72) Inventor: Frichot, Tommy, 8330 Beder (DK); Krishna, Vinay Belathur, 8200 Aarhus N (DK); Granchev, Martin Denislav, 8240 Risskov (DK)
(74) Representative: Vestas Patents Department

(57) **Abstract**

Embodiments herein describe improved techniques to evaluate and effectively communicate an LPE categorization. An initial LPE categorization may be generated from, for example, SCADA data collected at the wind turbine by a SCADA system. The initial LEP categorization and different categorization predictions from other auxiliary data sources also collected at the wind turbine may be evaluated by an LPE categorization Al system. This LPE categorization Al system is configured with categorization ML models. The LPE categorization system outputs a final LPE categorization which may differ from the initial LPE categorization.

## Description

### BACKGROUND

### Field of the Invention

Embodiments presented in this disclosure generally relate to artificial intelligence (Al), and more specifically, to categorizing a lost production event (LPE) and communicating the categorization result.

### Description of the Related Art

Wind turbines are mechanical devices designed to harness the kinetic energy of wind and convert it into electricity. Typically, wind turbines include a tower, housing for a generator, rotor blades, among other components, such as brakes, for operating the turbine. Blades usually have an aerodynamic design for the purpose of capturing as much energy as possible. The wind turns the blades of the turbine around a rotator, allowing a generator to spin, producing electrical energy. Most turbines use two to three blades. Wind turbines vary in size, being from a smaller variety of 100 kilowatts or less, to larger utility scale turbines that may be larger than five megawatts of generation capacity. Generally, taller towers are capable of harnessing stronger winds than those that are smaller. The orientation of wind turbines may change according to the direction of the wind, ensuring as much energy is generated as possible. This change may be controlled by yaw motors. Environmentally, wind turbines serve an important role in reducing carbon emissions. Being a renewable source of energy, wind turbines offer clean and sustainable energy, effectively working to mitigate climate change.

An LPE refers to an unplanned disruption in a production process, resulting in a loss of productivity. It may be caused by numerous factors, including power outages, supply chain disruptions, labor outages, and quality control issues, among other factors. Effective management and mitigation of LPEs aide in production efficiency.

Often, efforts are made by humans to ensure an initial categorization of an LPE is correct, requiring tedious manual parsing of data and consideration. These efforts are not always accurate. Additionally, communicating the results can be difficult because of language barriers, inadequate vocabulary, and other issues which leave pieces of the explanation lost in translation, increasing the risk the LPE repeats due to inadequate reporting.

### SUMMARY

One embodiment of the present disclosure is a method, the method including receiving different types of data from a wind turbine; receiving an initial categorization of a lost production event (LPE) that occurred at the wind turbine, where the LPE occurred while the different types of data were measured at the wind turbine; determining categorizations of the LPE using a plurality of machine learning (ML) models, where each of the plurality of ML models corresponds to one of the different types of data; and determining a final categorization of the LPE using the categorizations generated by the plurality of ML models and the initial categorization.

In one embodiment, the method includes determining the final categorization is performed using a categorization Al system that receives as inputs the categorizations generated by the plurality of ML models and the initial categorization.

In one embodiment, the method includes any of the embodiments above and the different types of data includes data generated by a Supervisory Control and Data Acquisition (SCADA) system associated with the wind turbine, maintenance activities on the wind turbine, and weather data at the wind turbine.

In one embodiment, the method includes the previous embodiment and that the data generated by the SCADA system includes 10-minute signal data and event data.

In one embodiment, the method includes the embodiment above and the different types of data also includes vibrational data associated with the wind turbine.

In one embodiment, the method includes any of the embodiments above and further includes generating, using a large language model, a textual description explaining why the final categorization of the LPE is different from the initial categorization.

In one embodiment, the method includes the embodiment above and further includes receiving feedback indicating that the final categorization of the LPE was incorrect and retraining the plurality of ML models based on the feedback.

In one embodiment, the method includes any of the embodiments above and that the initial categorization of the LPE is done using only data measured by the wind turbine.

Another embodiment described herein is a system, the system including one or more processors; and memory configured to store an application which when executed by any combination of the one or more processors performs an operation, the operation including: receiving different types of data from a wind turbine; receiving an initial categorization of a lost production event (LPE) that occurred at the wind turbine, where the LPE occurred while the different types of data were measured at the wind turbine; determining categorizations of the LPE using a plurality of machine learning (ML) models, where each of the plurality of ML models corresponds to one of the different types of data; and determining a final categorization of the LPE using the categorizations generated by the plurality of ML models and the initial categorization.

In one embodiment, the system above includes determining the final categorization is performed using a categorization Al system that receives as inputs the categorizations generated by the plurality of ML models and the initial categorization.

In one embodiment, the system includes any of the embodiments above and that the different types of data includes data generated by a Supervisory Control and Data Acquisition (SCADA) system associated with the wind turbine, maintenance activities on the wind turbine, and weather data at the wind turbine.

In one embodiment, the system includes the previous embodiment and that the data generated by the SCADA system comprises 10-minute signal data and event data.

In one embodiment, the system includes any of the embodiments above and the operation further includes generating, using a large language model, a textual description explaining why the final categorization of the LPE is different from the initial categorization.

In one embodiment, the system includes the previous embodiment and the operation further includes receiving feedback indicating that the final categorization of the LPE was incorrect and retraining the plurality of ML models based on the feedback.

Another embodiment described herein is a computer-readable storage medium having computer-readable program code embodied therewith, the computer-readable program code executable by one or more computer processors to: receive different types of data from a wind turbine; receive an initial categorization of a lost production event (LPE) that occurred at the wind turbine, where the LPE occurred while the different types of data were measured at the wind turbine; determine categorizations of the LPE using a plurality of machine learning (ML) models, where each of the plurality of ML models corresponds to one of the different types of data; and determine a final categorization of the LPE using the categorizations generated by the plurality of ML models and the initial categorization.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a diagrammatic view of a wind turbine, according to an embodiment described in this present disclosure.
Figure 2 illustrates a diagrammatic view of the components internal to the nacelle and tower of a wind turbine, according to an embodiment described in this present disclosure.
Figure 3 illustrates a workflow for providing a final LPE categorization and a textual description of that LPE categorization, according to some embodiments.
Figure 4 illustrates components of SCADA system data, according to some embodiments.
Figure 5 illustrates components of auxiliary data sources, and trained data models for the respective components, according to some embodiments.
Figure 6 illustrates a workflow for communicating a LPE categorization to a LLM, according to some embodiments.
Figure 7 illustrates a workflow for an LLM generating a textual description according to the LPE categorization, according to one embodiment.

To facilitate understanding, identical reference numerals have been used, where possible, to designate identical elements that are common to the figures. It is contemplated that elements disclosed in one embodiment may be beneficially utilized on other embodiments without specific recitation.

### DESCRIPTION OF EXAMPLE EMBODIMENTS

A wind turbine may not output a level of production that is expected, signaling a LPE has occurred. When data indicates that an LPE has occurred, the embodiments herein categorize and communicate the LPE for owner of the wind turbine. Embodiments herein relate to improved techniques to evaluate and then effectively communicate an LPE categorization.

In many instances, AI has provided solutions to problems humans may not be capable of providing alone. As described herein, AI may be applied to not only categorize an LPE by processing larger sums of data and at speeds beyond the capabilities of humans, but by communicating the categorization and information applying to the categorization more effectively than present solutions offer.

In embodiments herein, data collected at the wind turbine may be categorized. Examples of these categories can include wind data, weather data, data regarding environmental constraints, and contractual data. Among the categorized data, a subset may be used to generate an initial LPE categorization. This subset can be data collected by a supervisory control and data acquisition (SCADA) system such as 10-minute data and/or event data. A second subset of data may also be evaluated using a plurality of machine learning models. The second subset may include any other data collected at the power plant such as service orders and site specific contractual data, site specific market and environmental constraints data, site specific wind data measurements (including lightning data, etc.) and content management system (CMS) data, among other types of data sources. These plurality of models may output separate categorization predictions. The initial LEP categorization and the separate categorization predictions may be evaluated by an LPE categorization AI system, which may use a categorization ML model. The LPE categorization system outputs a final LPE categorization, which may be presented to a Large Language Model (LLM) to output a textual description of the final categorization, explaining why the final categorization may have been different from the initial categorization, among other pieces of information.

Holistically, embodiments herein describe an improved way of identifying and communicating information surrounding categorizing an LPE.

### EXAMPLE EMBODIMENTS

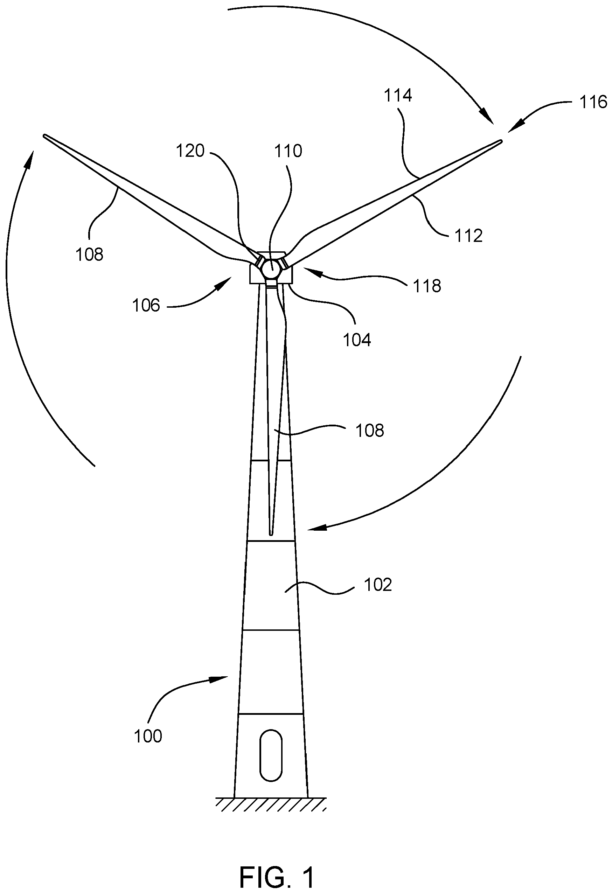

Figure 1 illustrates a diagrammatic view of a horizontal-axis wind turbine generator 100. The wind turbine generator 100 typically comprises a tower 102 and a wind turbine nacelle 104 located at the top of the tower 102. A wind turbine rotor 106 may be connected with the nacelle 104 through a low speed shaft extending out of the nacelle 104. The wind turbine rotor 106 comprises three rotor blades 108 mounted on a common hub 110 which rotate in a rotor plane, but may comprise any suitable number of blades, such as one, two, four, five, or more blades. The blades 108 (or airfoil) typically each have an aerodynamic shape with a leading edge 112 for facing into the wind, a trailing edge 114 at the opposite end of a chord for the blades 108, a tip 116, and a root 118 for attaching to the hub 110 in any suitable manner.

For some embodiments, the blades 108 may be connected to the hub 110 using pitch bearings 120 such that each blade 108 may be rotated around its longitudinal axis to adjust the blade's pitch. The pitch angle of a blade 108 relative to the rotor plane may be controlled by linear actuators, hydraulic actuators, or stepper motors, for example, connected between the hub 110 and the blades 108.

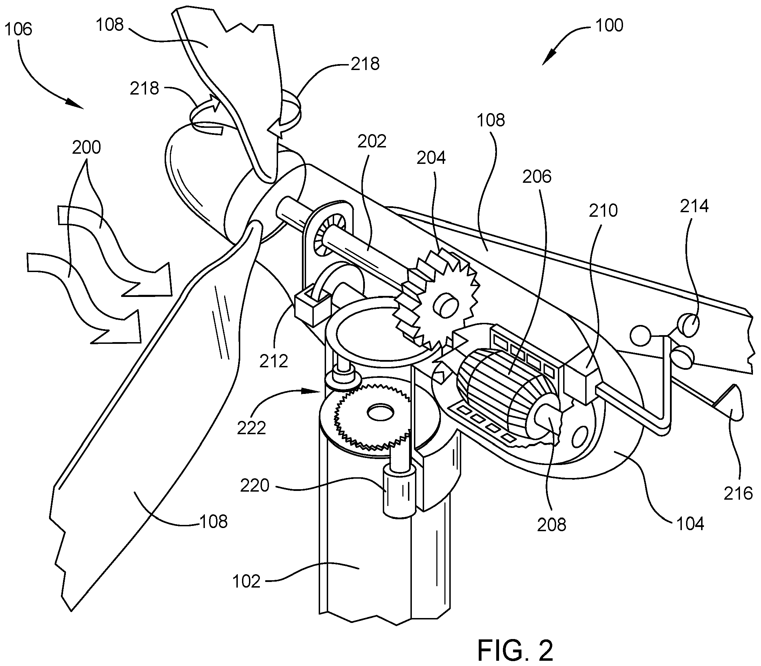

Figure 2 illustrates a diagrammatic view of typical components internal to the nacelle 104 and tower 102 of a wind turbine generator 100. When the wind 200 pushes on the blades 108, the rotor 106 spins and rotates a low-speed shaft 202. Gears in a gearbox 204 mechanically convert the low rotational speed of the low-speed shaft 202 into a relatively high rotational speed of a high-speed shaft 208 suitable for generating electricity using a generator 206.

A controller 210 may sense the rotational speed of one or both of the shafts 202, 208. If the controller decides that the shaft(s) are rotating too fast, the controller may signal a braking system 212 to slow the rotation of the shafts, which slows the rotation of the rotor 106 - *i.e.,* reduces the revolutions per minute (RPM). The braking system 212 may prevent damage to the components of the wind turbine generator 100. The controller 210 may also receive inputs from an anemometer 214 (providing wind speed) and/or a wind vane 216 (providing wind direction). Based on information received, the controller 210 may send a control signal to one or more of the blades 108 in an effort to adjust the pitch 218 of the blades. By adjusting the pitch 218 of the blades with respect to the wind direction, the rotational speed of the rotor (and therefore, the shafts 202, 208) may be increased or decreased. Based on the wind direction, for example, the controller 210 may send a control signal to an assembly comprising a yaw motor 220 and a yaw drive 222 to rotate the nacelle 104 with respect to the tower 102, such that the rotor 106 may be positioned to face more (or, in certain circumstances, less) upwind.

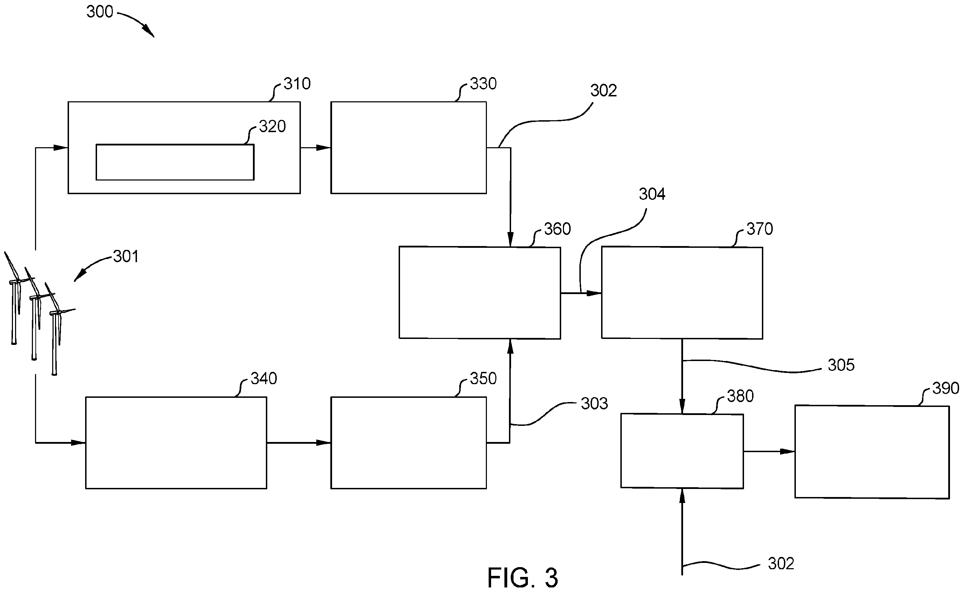

Figure 3 illustrates system 300, which provides a final LPE categorization and a textual description of that LPE categorization. Figure 3 illustrates a power plant 301, depicted as wind turbines. Wind turbine power plants may include one turbine, or multiple wind turbines collectively creating a wind farm for utility-scale power generation. At power plant 301, different types of data are collected. One subgroup is SCADA data 320, collected by a SCADA System 310, and another subgroup is auxiliary data sources 340. The SCADA data 320 may be used to generate an initial LPE categorization 302 using a categorization predictor 330. An LPE categorization refers to the dominant reason behind a particular LPE event. Examples of LPE categorizations include but are not limited to equipment failure, environmental factors (e.g.,noise ordinances, animal migration, etc.), scheduled maintenance, quality issues, labor issues, etc. The initial LPE categorization 302 would be a categorization of the LPE event based on information received from the SCADA system 310. The auxiliary data sources 340 may go through separate trained data models 350, which in one embodiment, are a plurality of machine learning (ML) models corresponding to one of the different types of data found in the auxiliary data sources. The trained data models 350 output separate categorization predictions 303. The initial LPE categorization and the categorization predictions are inputted to an LPE categorization AI system 360, which may include a categorization ML model. The LPE categorization AI system 360 outputs a final LPE categorization 304, which in this example, is verified in an external final LPE categorization verification process 370.

To ensure model accuracy, the final LPE categorization 304 and the verified final LPE categorization 305 may be compared. A feedback loop may be initiated to improve the accuracy of the LPE categorization AI 360. Once a verified final LPE categorization 305 is established, the result may be fed to a large language model 380, along with the initial LPE categorization 302, and any other pertinent information. The large language model 380 then provides a textual description of the LPE categorization 390. The textual description of the LPE categorization 390 may include information regarding reasons a mismatch might have occurred between the initial LPE categorization 302 and the verified final LPE categorization 305, and comments describing the resulted calculations, among other information it may be configured to include.

The SCADA system 310 refers to an industrial control system used for monitoring and controlling various industrial processes and equipment. The SCADA system 310 may be associated with the wind turbine, maintenance activities on the wind turbine, and weather data at the wind turbine. Components of a SCADA system may include remote terminal units (RTUs) or programmable logic controllers (PLCs). These components may be used for monitoring and controlling the equipment and processes of a power plant. RTUs are electronic field devices deployed at remote locations such as the power plant 301. They are used to collect data from a plurality of sensors and instruments, which may include data regarding temperature, pressure, flow rates, and equipment status, among other data types generated by the wind turbines in the power plant 301. RTUs may be equipped to convert sensor signals to digital data that may be transmitted back to a control center.

RTUs may also receive instruction from a control center over a communication network, enabling them to control field devices. PLCs are also capable of controlling industrial processes, but are digital computers. They may also be deployed at local sites such as the power plant 301, and are configured to read inputs from sensors to generate outputs to control equipment used by the power plant. RTUs are used more for remote monitoring and remote control of power plants, whereas PLCs are used for local control. Data collected by a SCADA system may be transmitted to a central control center for visualization or analyzation. The advantages a SCADA system provide include centralization of monitoring and controlling processes that may be fairly spread out. SCADA systems improve efficiency of power plants, reducing the need for on-site personnel and offering improvements in managing the operations of a power plant.

The SCADA data 320 incudes various data collected in various ways by the SCADA system 310. SCADA data in general is used for monitoring and understanding the way a power plant is performing. It may be visualized using a human-machine interface (HMI) that may be integrated with other systems for further analysis and reporting. An HMI in the context of SCADA may be a means to manage a process occurring in a power plant 301, and overseeing the equipment involved in the process. HMIs may provide a visual interface, such as a graphical user interface (GUI). Visualizations may be generated, including process diagrams, charts, data about the relationship between the process being carried out, and information regarding the equipment of the power plant 301.

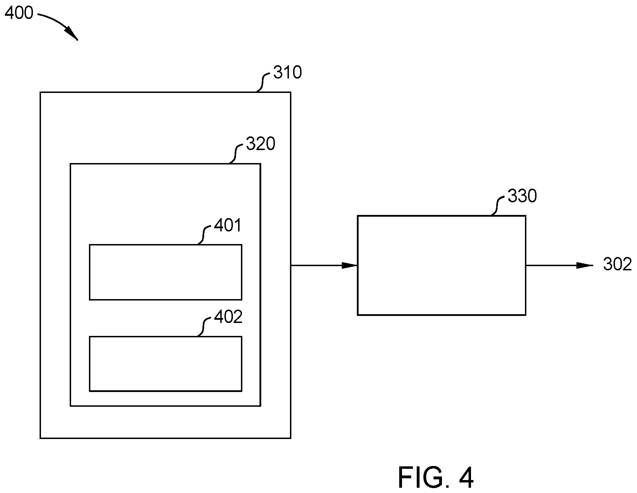

Of the SCADA data 320, those defined as 10-minute data and event data may be used by the categorization predictor 330, to output an initial LPE categorization 302. SCADA data is collected at the power plant site 301. Examples of SCADA data 320 are discussed in more detail in Figure 4 below.

The auxiliary data sources 340 can be myriad types of data. The auxiliary data sources 340 may be outside of the scope of the SCADA data 320 used to output the initial LPE categorization 302. For example, the auxiliary data sources may include service orders and site specific contractual data, site specific market and environmental constraints data, site specific wind data measurements (including lightning data, etc.) and content management system (CMS) data, among other types of data sources. The auxiliary data sources 340 may be received at various rates in various densities.

A combination of the auxiliary data sources 340 and the SCADA data 320 may be used to determine the root cause of the downtime that indicates an LPE, thus, helping with categorizing the LPE. The trained data models 350 may include a plurality of ML models designed to process the specific data types comprising the auxiliary data sources 340. Each of the plurality of ML models comprising the trained data models 350 outputs a categorization prediction, in totality comprising the categorization predictions 303.

In one embodiment, the trained data models 350 are trained with historical data of human corrected categorizations of LPEs. For example, the training data can include labeled data where a human (e.g. an expert or trained person) has evaluated historical SCADA data 320, and/or the initial LPE categorization 302 from past LPEs and provided an LPE categorization. A comprehensive dataset may be compiled where the data points represent LPEs according to historical records. The data set may be split into a training set, a validation set and a test set. During the training phase, the models 350 can process input data and adjust their parameters to minimize error between predictions and the actual labels from the data set using iterative optimization techniques (such as gradient descent). This labeled data may act as a guide that enables the models 350 to learn underlying relationships and patterns of the dataset it is trained with. The validation set can be used to tune hyper-parameters and prevent overfitting for when the model has to perform on new data. The test set can be used to evaluate and assess the model's generalization capabilities. For the models 350 to accurately make predictions, the accuracy and consistency of the historical human-labeled data on LPEs used to train them is important. The historical data of human corrected categorizations can form the foundation upon which the models' 350 learning and subsequent performance are built.

The categorization predictions 303 from the trained data models 350, alongside the initial LPE categorization 302 from the SCADA data 320 may be fed to the LPE categorization AI 360. Data for the LPE categorization AI is collected at the power plant site 301.

In one embodiment, the LPE categorization AI 360 may refer to an AI system that includes several interconnected components working together to generate the final LPE categorization 304. The LPE categorization AI 260 may be designed to process, analyze and derive insights from the incoming data streams of the categorization predictions 303 and the initial LPE categorization 302.

One component of the LPE categorization AI 360 may be for data acquisition and preprocessing. This component may include infrastructure that prepares the data such that it is in a format suitable for analyzation. Tasks such as data cleaning, filtering, and normalizing, among other tasks in this realm, may help ensure the consistency and quality of the resulting final LPE categorization 304 outputted by the LPE categorization Al. Data cleaning and filtering may involve identifying errors, inconsistencies, missing values and other issues in a raw data set. It may include removing incomplete records from the data set, removing duplicate information, standardizing formats, and handling outliers that may skew the model, among other techniques to ensure the quality and integrity of data.

Normalizing data as a preprocessing step involves transforming numerical to a common scale. Some techniques of normalization include min-max scaling, which involves scaling the values of a variable to a specific range. One non limiting example of this may be putting certain values in a range of [0,1] and others in a range between [-1,0]. Z-score normalization is another technique in which values of a variable may be rescaled to have a mean of 0 and a standard deviation of 1. This technique involves centering data around the mean value, and scaling the data based on how it varies, which may be helpful also for identifying outliers of data. Log transformations is another example of normalizing data. Log transformations involves using the natural log function to the numerical value of data that is being processed. This stabilizes the variance of data, and is useful if the inputted data exhibits exponential growth, as it helps with linearizing and reducing skewness in data. Different normalization methods may be used depending on the characteristics of a dataset.

Another component of the LPE categorization AI 360 may be feature extraction or feature selection which refers to curating a subset of relevant data points from the entire data set. The goal of feature selection and extraction is to represent the raw data in a more compact and informative way by capturing the relevant characteristics or patterns that are relevant to the problem at hand. Techniques of feature extraction can include filtering out information using correlation data, or methods embedded into a machine learning model itself such as regularization, which involves automatically selecting relevant information while also training the model itself. Other techniques can include principal component analysis (PCA), which converts a set of potentially correlated features into uncorrelated principal components, linear discriminant analysis, which finds a linear combination of features that best differentiates the data into categories, and many other methods with the common goal of generating a relevant dataset from the data collected.

Another component of the LPE categorization AI 360 may include machine learning models, responsible for learning patterns and relationships within the data streams and making improved predictions or decisions. Common types of models include a combination of supervised learning models, unsupervised learning models, and reinforcement learning models. Models may be integrated in unique ways to improve the LPE categorization Al's understanding of the problem at hand or the system holistically. One single model may work in conjunction with, or rely on other models to some degree. This creates an aggregate or boosted model. Integration of machine learning models may include merging outputs, performing feature level fusion, or using ensemble learning techniques, among others, to generate a more accurate prediction. Feature level fusion is a technique involving combining data features into a single representation for further analysis. Ensemble learning involves training the components of a boosted model, and combining the components' predictions to improve overall performance, providing a level of accuracy and efficiency that an individual model, or non-boosted model may not achieve. Aggregating the predictions of multiple diverse components that make up a boosted model allows the errors of those individual components to cancel out. This improves the robustness and accuracy of predictions. Ensemble learning may be implemented using bagging techniques, where multiple instances of one model may be trained with different subsets of data, and predictions made are averaged. Ensemble learning may also be implemented using boosting. Boosting involves training components of a boosted model by a subsequent component learning from the mistakes of preceding component. These are a few non limiting examples of what a model within the LPE categorization AI 360 may include.

The LPE categorization AI 360 may also be configured to make a decision. This decision may involve LPE categorization AI 360 outputting the final LPE categorization 304. The final LPE categorization 304 may be compared against a verified final LPE categorization 305. This verified final LPE categorization 305 may result from the final LPE categorization 304 undergoing a final LPE categorization verification process 370. The final LPE categorization verification process may involve at least one person reviewing the data and making a conclusion on whether or not the final LPE categorization 304 outputted by the LPE categorization AI 360 is accurate. Results from the final LPE categorization verification process 370 may be reported in a feedback loop, back to the LPE categorization Al. One embodiment may have it so the feedback loop flows to the trained data models 350, whereas another embodiment have the feedback loop configured just to go back the LPE categorization Al. Both embodiments are configurations enabling a more accurate result to be outputted in the future by the LPE categorization Al.

Feedback loops in Al systems play a role in the iterative processes of model training, evaluation, and refinement. They may contribute to an improvement in the accuracy and efficiency of the system generating new predictions. Once models have been presented with labeled data, they may be configured to recognize patterns and relationships between features of the data by adjusting according to what the dataset presents. They may then utilize unseen test data configured to identify issues with overfitting or underfitting (issues hindering a model's ability to generalize across myriad data sets). This may ultimately aid in configuring the model to more efficiently produce accurate predictions. Adjustments may be made to models to identify shortcomings of their performance. When models are deemed suitable for deployment for their specific use cases, monitoring mechanisms may still track the models' performance in production. Issues that may cause deviations from their expected behavior by be noted, and training may be triggered as needed. Continuously monitoring the performance of a models with feedback loops may improve the accuracy of the models or systems over time.

The verified final LPE categorization 305 as well as the initial LPE Categorization 302 is fed to the large language model 380. The large language model 380 may then output a textual description of the LPE categorization 390, including but not limited to information regarding why the verified final LPE categorization 305 may not have matched the initial LPE categorization 302. The large language model 380 may be an AI system configured to understand and generate text. Large language model 380 may be configured to generate text in a plurality of languages. Large language models may use deep learning techniques, such as but not limited to neural networks, to handle vast textual data. They may be trained on vast datasets of words, allowing the model to learn the useable vocabulary, syntax, grammar, and sematic relationships necessary to output an adequate text response. They may include multiple layers of nodes to accurately capture long-range dependencies and contextual information found in texts. This improves clarity, conciseness, and accuracy, among other things, when communicating results.

Figure 4 illustrates examples of SCADA data. Within the SCADA system 310 is SCADA system data 320. As discussed above in Figure 3, the SCADA system data 320 is fed to the categorization predictor 330, producing the initial LPE categorization 302 prediction. In this example, the SCADA system data 320 includes 10-minute signal data 401 and event data 402.

10-minute signal data 401 may refer to averages of data collected and recorded by the SCADA system 310 reported in 10-minute intervals. This 10-minute interval data may be collected from various sensors, devices or equipment of the SCADA system 310, which can be disposed on the wind turbines or at least connected to the wind turbines. 10-minute signal data may be identified with a timestamp. Each data point may include a timestamp indicating when the data was collected. 10-minute data may include a minimum, maximum, average and standard deviation associated with the data collected between 10-minute intervals.

Event data 402 refers to discrete occurrences or significant events noted by the SCADA system 310. Event data 402 may or may not be recorded and collected at regular time intervals. Event data 402 may be logged in response to certain triggers of detected conditions noted by the SCADA system 310. Some non limiting examples of events that may trigger event data 402 to be logged would be alarms, detected faults, instances that require attention, emergency shutdowns, and state changes in equipment, among other types of data signaling a an event.

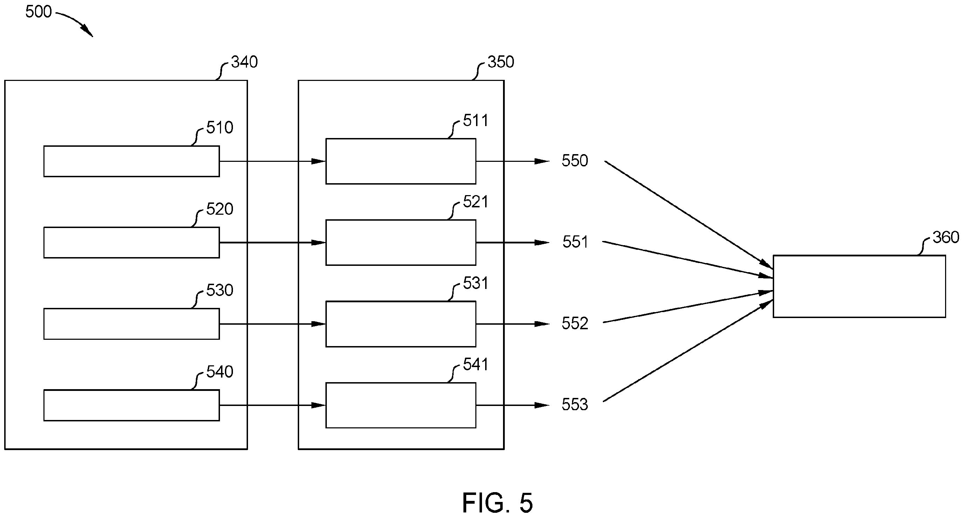

Figure 5 illustrates example auxiliary data sources 340 and their relationship with the plurality of trained models 350 discussed in Fig. 3. Auxiliary data sources 340 represent data other than SCADA data. There are numerous types of auxiliary data sources 340. The numerous data types are depicted in Figure 5, as but not limited to, data type one 510, data type two 520, and data type three 530, data type four 540. Examples of auxiliary data include but are not limited to service orders and site specific contractual data (such as information surrounding employee agreements, contractor agreements, etc.), site specific market and environmental constraints, vibrational data, site specific wind data measurements, lightning data, weather data, content management system (CMS) data, and data of high frequency events. Site specific data refers to data collected at or pertaining to the wind turbine 301. It provides insights into the conditions and characteristics of the location it is collected from. Each type of auxiliary data source corresponds to a particular trained data model. For example, the data type one 510 may be fed to an ML model configured to handle data type one 510, such as data type one model 511. The data type two 520 may be fed to a separate model configured to handle data of data type two 520, such as data type two model 521. The data type three 530 may be fed to a separate model configured to handle data of data type three 530, such as data type three model 531. The data type four 540 may be fed to a separate model configured to handle data of data type four 540, such as data type four model 541. This pattern may continue based on the number of data types comprising the auxiliary data sources 340, and their plurality of corresponding trained data models 350.

The plurality of trained data models 350 each output their own categorization prediction. For example, data type one model 511 may output categorization prediction 550, data type two model 521 may output categorization prediction 551, data type three model 531 may output categorization prediction 553, and data type four model 541 may output categorization prediction 554. This pattern may continue depending on the number of data types comprising the auxiliary data sources 340, and their plurality of corresponding trained data models 350. These predictions may be outputted for the LPE categorization AI 360 to use as part of the data is uses to output its final LPE categorization 304. The trained data models 350 are trained with historical data of human labeled categorizations of LPEs. That is, an expert or trained professional can evaluate initial categorizations (and the data used to generate those initial categorizations) and determine whether they are correct, or should be categorized as a different LPE. This labeled data can be used to train the plurality of data models 350. In one embodiment, the predictions are classification tasks, where what is outputted represents a level of confidence indicating a probability of the data type associated with the model contributing to the detected LPE event.

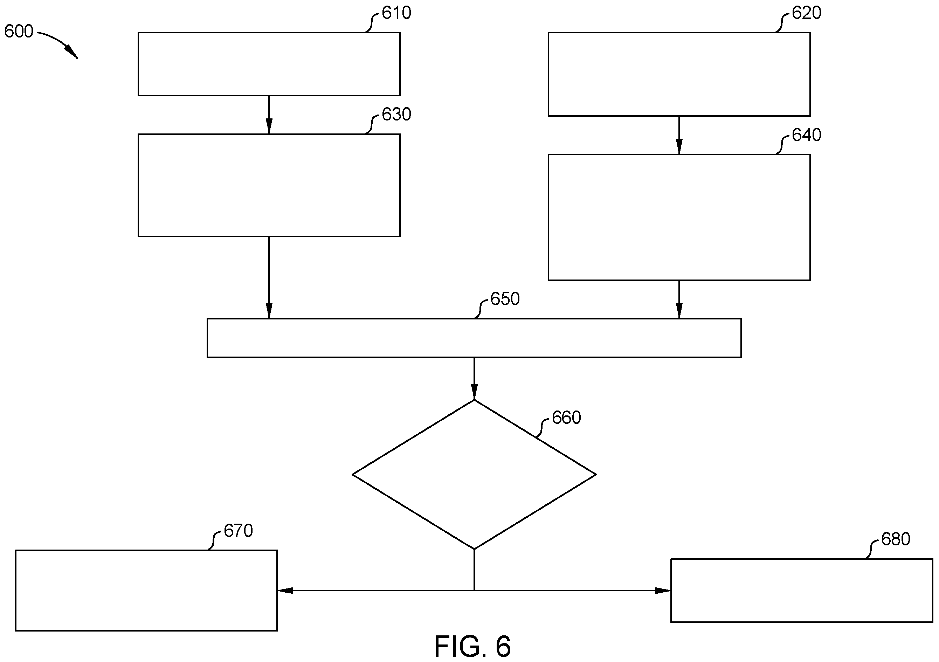

Figure 6 depicts the flow 600 of making an LPE categorization.

At block 610, the categorization predictor 330 receives the SCADA system data 320 collected at the wind turbine. In conjunction with block 610, at bock 620 the plurality of trained machine learning models, trained data models 250, receive other different types of data from the wind turbine - e.g., the auxiliary data sources 340.

The auxiliary data sources may or may not already be separated into different data types. If not, categorization of raw data, enabling the auxiliary data sources 340 to contain different buckets of different data types, involves analyzing the shared characteristics, attributes or criteria of the data. Categorizing data involves establishing a categorization criteria. Choosing categorization criteria may involve identifying rules, setting thresholds, ranges or conditions based on specific values, patterns or characteristics of data. Defined categories may be based on various factors and characteristics of data. Some embodiments may allow certain data to be placed in a plurality of categorizations or buckets, whereas other embodiments may only allow data to be characterized in one bucket or category. There are a plurality of methods that may be implemented to apply categorization to raw data. Such methods include but are not limited to manual classification, automated algorithms, statistical analysis, or machine learning models. Categorization criteria may be adjusted as needed.

At block 630, the LPE categorization AI receives the initial LPE categorization 302 outputted by the categorization predictor 330. In one embodiment, the initial LPE categorization 302 is generated by using data collected by the SCADA system. This data includes 10-minute data 401 and event data 402. The categorization predictor 330 considers these values and outputs the initial LPE categorization prediction based on a confidence level attributed to each of the considered data types. In conjunction with block 630 (e.g., in parallel or at different times), at block 640, the LPE categorization AI receives the plurality of categorizations made by the plurality of trained data models 350. In one embodiment, each of the plurality of categorizations corresponds to the particular data type each of the plurality of the trained data models 350 is configured to handle. Categories of the auxiliary data sources may include service orders and site specific contractual data, site specific market and environmental constraints data, site specific wind data measurements (including lightning data, etc.) and content management system (CMS) data, among other types of data sources. The auxiliary data sources 340 may be received at various rates in various densities. The machine learning model corresponding to the data type outputs a likelihood of the data type's contribution to the LPE. These likelihoods, as well as the initial LPE categorization prediction, are used by the LPE categorization AI 360 to output a final LPE categorization 304.

At block 650, the LPE categorization AI 360 uses the data received to determine a final LPE categorization 304. Upon this determination, a verification process may be performed to verify the validity of the LPE categorization AI's result. The final LPE categorization 304 may be correct or incorrect, determined within the final LPE categorization verification process 370. For example, the initial LPE categorization 302 may indicate the LPE event occurred due to a broken pipe, categorizing the event as "equipment failure." However, upon the LPE categorization AI 360 considering categorization predictions 303 from the trained data models 350 configured to process each of the auxiliary data sources 340, the LPE categorization AI 360 may note that the pipe was manually turned off for maintenance to be performed. This outputs a final LPE categorization as "scheduled maintenance," which is different than the initial LPE categorization 302. The outputted "scheduled maintenance" can be verified by checking that the scheduled maintenance was actually carried out at the time of the LPE.

At block 670, the LPE categorization AI 360 may be retrained as the result of the LPE categorization verification process 370. Depending on the validity of the final LPE categorization 304 generated by the LPE categorization AI 360, the feedback loop to further train the LPE categorization AI 360 may look different. If the final LPE categorization is correct, determined in block 660 as part of the final LPE categorization verification process 370, positive feedback may be provided to the LPE categorization AI to reinforce its predictions. A correct prediction may be used to update a model's parameters such that the learned patterns or relationships between input features and target variables that resulted in the correct output is strengthened. Over time, positive feedback for correct predictions may improve performance metrics. If the final LPE categorization 304 is incorrect, determined in block 660 as part of the final LPE categorization verification process 370, negative feedback may be provided. Incorrect predictions may help identify errors or weaknesses in a system. Negative feedback may help identify the source of the mistake, and allow a model to adjust its parameters such that a similar mistake will not happen again. Negative feedback may improve generalization and enhance overall performance. In some embodiments, this feedback may extend to the plurality of trained data models 350. In other embodiments, this feedback loop may only extend to the LPE categorization AI 360 system.

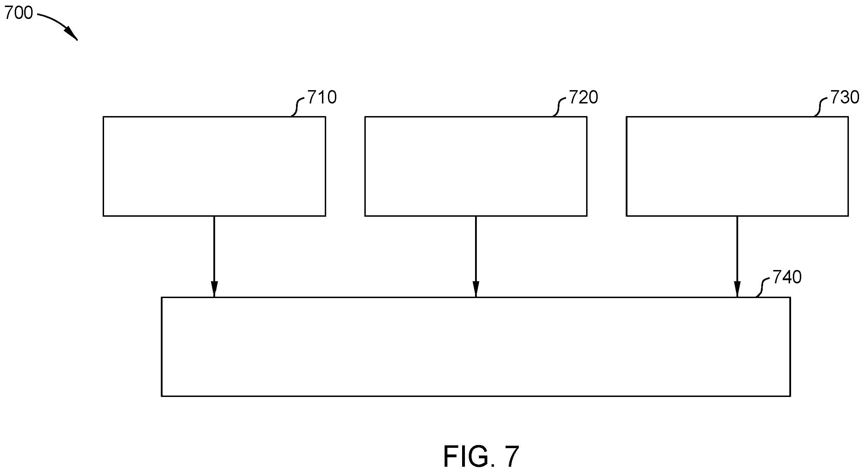

At block 680, the LPE categorization AI communicates results to the large language model 380. Results that are communicated may encompass any information the large language model 380 may use to generate a summary of what the final LPE categorization 304 is, what the verified final LPE categorization 305 is, or what the initial LPE categorization 302 is. If there are any discrepancies between the values, the large language model 380 may also use data for explaining why that might be. More detail regarding the large language model 380 is provided in Figure 7.

Figure 7 illustrates a flow 700 for the large language model 380 outputting a textual description of the LPE categorization 390. Blocks 710, 720 and 730 may occur conjunction with one another.

At block 710, the large language model 380 receives the verified final LPE categorization 305. At block 720, the large language model 380 receives the initial LPE categorization 302, and at block 730, the large language model 380 receives any other data or information that may have contributed to the verified final LPE categorization 305. Data presented to the large language model may be cleaned for it to be interpreted by the large language model 380. For example, numerical data may be converted into a text format, or techniques such as tokenization may be used to derive meaning from the inputted data that the large language model 380 may use. Tokenization may involve the large language model 380 to divide large chunks of data into more digestible, smaller, tokens of data from which it can derive meaning. Once data is formatted such that the large language model 380 can understand it, it may capture the relationship between inputted data and its knowledge of previous contexts of the data.

At block 740, the large language model 380 generates a textual description of the LPE categorization 390, which can include reasons why the final LPE categorization 304 does not match the initial LPE categorization 302. The large language model 380 may process inputted data through neural network layers to capture the context of the inputted data against its understanding of context based on its pre-training stage. A large language model's pre training stage may include processing large sums of data from various sources (such as books, articles, the internet) to develop a baseline of contextual understanding. A textual response may be generated conditioned on the input data and its learned representations of context. The response may range in format and language, among other things.

In the preceding, reference is made to embodiments presented in this disclosure. However, the scope of the present disclosure is not limited to specific described embodiments. Instead, any combination of the features and elements provided above, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments and advantages described herein are merely illustrative and are not considered elements or limitations of the appended claims except where explicitly recited in a claim(s).

As will be appreciated by one skilled in the art, the embodiments disclosed herein may be embodied as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer readable medium(s) having computer readable program code embodied thereon.

The present invention may be a system, a method, and/or a computer program product. The computer program product may include a computer-readable storage medium (or media) (e.g., a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing) having computer readable program instructions thereon for causing a processor to carry out aspects of the present invention.

Aspects of the present disclosure are described with reference to flowchart illustrations and/or block diagrams of methods, apparatus (systems) and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the Figures illustrate the architecture, functionality and operation of possible implementations of systems, methods and computer program products according to various embodiments. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method, comprising:
receiving different types of data from a wind turbine;
receiving an initial categorization of a lost production event (LPE) that occurred at the wind turbine, wherein the LPE occurred while the different types of data were measured at the wind turbine;
determining categorizations of the LPE using a plurality of machine learning (ML) models, wherein each of the plurality of ML models corresponds to one of the different types of data; and
determining a final categorization of the LPE using the categorizations generated by the plurality of ML models and the initial categorization.

2. The method of claim 1, wherein determining the final categorization is performed using a categorization AI system that receives as inputs the categorizations generated by the plurality of ML models and the initial categorization.

3. The method of any of the claims above, wherein the different types of data includes data generated by a Supervisory Control and Data Acquisition (SCADA) system associated with the wind turbine, maintenance activities on the wind turbine, and weather data at the wind turbine.

4. The method of claim 3, wherein the data generated by the SCADA system comprises 10-minute signal data and event data.

5. The method of claim 3, wherein the different types of data also includes vibrational data associated with the wind turbine.

6. The method of any of the claims above, further comprising:
generating, using a large language model, a textual description explaining why the final categorization of the LPE is different from the initial categorization.

7. The method of claim 6, further comprising:
receiving feedback indicating that the final categorization of the LPE was incorrect; and
retraining the plurality of ML models based on the feedback.

8. The method of any of the claims above, wherein the initial categorization of the LPE is done using only data measured by the wind turbine.

9. A system, comprising:
one or more processors; and
memory configured to store an application which when executed by any combination of the one or more processors performs an operation, the operation comprising:
receiving different types of data from a wind turbine;
receiving an initial categorization of a lost production event (LPE) that occurred at the wind turbine, wherein the LPE occurred while the different types of data were measured at the wind turbine;
determining categorizations of the LPE using a plurality of machine learning (ML) models, wherein each of the plurality of ML models corresponds to one of the different types of data; and
determining a final categorization of the LPE using the categorizations generated by the plurality of ML models and the initial categorization.

10. The system of claim 9, wherein determining the final categorization is performed using a categorization AI system that receives as inputs the categorizations generated by the plurality of ML models and the initial categorization.

11. The system of claims 9 or 10, wherein the different types of data includes data generated by a Supervisory Control and Data Acquisition (SCADA) system associated with the wind turbine, maintenance activities on the wind turbine, and weather data at the wind turbine.

12. The system of claim 11 wherein the data generated by the SCADA system comprises 10-minute signal data and event data.

13. The system of claims 9, 10, 11, or 12, wherein the operation further comprises:
generating, using a large language model, a textual description explaining why the final categorization of the LPE is different from the initial categorization.

14. The system of claim 13, wherein the operation further comprises:
receiving feedback indicating that the final categorization of the LPE was incorrect; and
retraining the plurality of ML models based on the feedback.

15. A computer-readable storage medium having computer-readable program code embodied therewith, the computer-readable program code executable by one or more computer processors to:
receive different types of data from a wind turbine;
receive an initial categorization of a lost production event (LPE) that occurred at the wind turbine, wherein the LPE occurred while the different types of data were measured at the wind turbine;
determine categorizations of the LPE using a plurality of machine learning (ML) models, wherein each of the plurality of ML models corresponds to one of the different types of data; and
determine a final categorization of the LPE using the categorizations generated by the plurality of ML models and the initial categorization.
